# EUROPEAN PATENT APPLICATION

(11) **EP 0 724 339 A2**
(43) Date of publication of application: **31.07.1996**
(21) Application number: 96101205.1
(22) Date of filing: 29.01.1996
(51) Int. Cl.: H04B 7/185

(54) **Mobile satellite communication terminal**

(30) Priority: 27.01.1995 JP 11338/95
(71) Applicant: NEC Corporation, Minato-ku, Tokyo 108-01 (JP)
(72) Inventor: Uchikawa, Setomi, Tokyo (JP)
(74) Representative: VOSSIUS & PARTNER

(57) **Abstract**

In order that communication may be performed independently of indoors or outdoors, in this mobile satellite communication terminal, when it is used indoors, the indoor terminal transmitting and receiving a signal in the ground radio channel is connected to the repeater terminal installed at a position from which the satellite can be seen by the ground radio channel, further, the repeater terminal communicates with the satellite by using the satellite channel. On the other hand, when it is used outdoors, the outdoor terminal is constituted by mounting the outdoor unit for the satellite channel consisting of the antenna for the satellite channel and the radio frequency section instead of the indoor unit consisting of the antenna for the ground radio channel and the radio frequency section of the indoor terminal.

## Description

The present invention relates to a mobile satellite communication terminal which is used for a mobile satellite communication system and especially can be used for satellite communication even indoors.

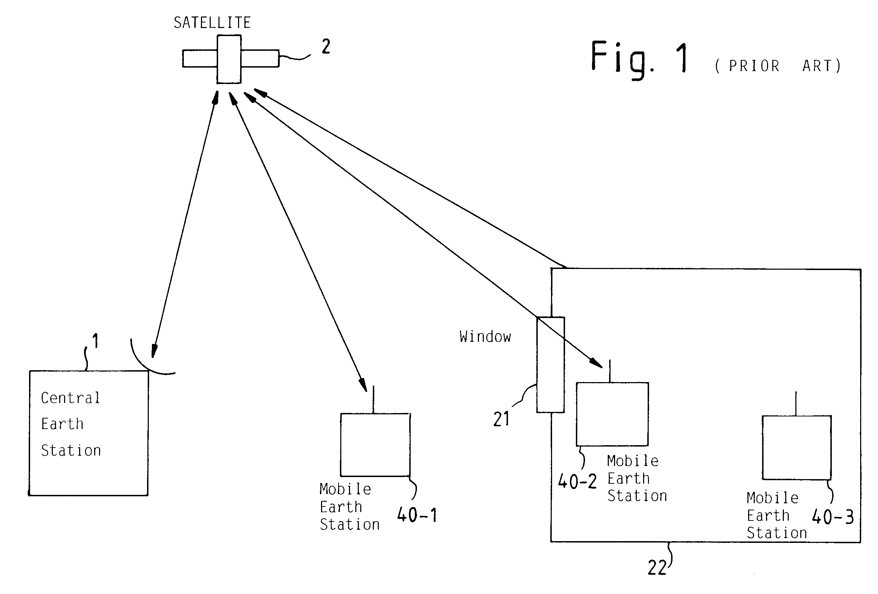

A conventional mobile satellite communication terminal is described in the following using Fig. 1 showing a system diagram of the mobile satellite communication terminal.

This system is constituted with a central earth station 1, plural mobile satellite communication terminals 40-1 to 40-3 (Hereinafter abbreviated as "terminal" to simplify it), and a satellite 2.

The terminals 40-1 to 40-3 are mobile satellite communication terminals having the same constitution, and are placed in a different position. For example, the terminal 40-1 out of the terminals is used outdoors, and has constitution in which it is connected to the central earth station 1 through the satellite 2. In this case, the terminal 40-1 can communicate with the satellite 2 in a range of visibility even if the terminal is moved between mountains and buildings and the like.

Also, the terminal 40-2 is placed inside of architecture such as a building and the like. In this case, for example, communication can be performed at a position from which the satellite can be seen such as an adjacent area of a window 21 provided in the building because of slight attenuation of a signal.

On the other hand, since the terminal 40-3 is used at a position being the inside of the building and apart from the window 21, the satellite 2 cannot be seen, transmitting and receiving signals for satellite communication cannot be transmitted.

To communicate by this terminal 40-3, it must be moved to a place such as the window and the like at which radio waves can be received.

As mentioned above, in the conventional mobile satellite communication system, communication cannot be performed when an obstacle exists between the mobile satellite communication terminal and the satellite.

Especially, in architecture such as a building and the like, communication can be performed at only a limited place such as the adjacent place of the window and the like, even if it is mobile as a mobile satellite communication terminal equipment, there is a problem such that it cannot be used with the high degree of freedom.

The above-mentioned mobile satellite communication system is reported in documents "PTC 1993 proceedings, p.835 - p.840" "INMARSAT-M PORTABLE MES".

A purpose of the present invention is to provide a mobile satellite communication terminal by which satellite communication can be freely utilized even if the mobile satellite communication terminal is placed at the inside of a building from which a satellite cannot be seen.

Therefore, the mobile satellite communication terminal of the present invention uses an indoor unit being attachable and detachable when it is used indoors, and has a means by which an indoor radio signal is transmitted and received between a repeater terminal and an indoor terminal, a means by which the indoor radio signal is converted to a satellite radio signal and transmission and reception are performed between the satellite and the indoor terminal through the repeater terminal placed at a position from which the satellite can be seen, and a means by which transmission and reception are performed between the satellite and the terminal by replacing the indoor unit by an outdoor unit when it is used outdoors.

Fig. 1 shows a system diagram of the conventional mobile satellite communication system.

Fig. 2 shows a system diagram of the mobile satellite communication terminal of the present invention.

Fig. 3A, Fig. 3B, Fig. 3C and Fig. 3D show drawings of replacing units being the basic element of the present invention.

Fig. 4A is a drawing showing the indoor terminal 4 constituted by combining the Fig. 3A and the Fig. 3D.

Fig. 4B is a drawing showing the repeater terminal 10 constituted by combining the Fig. 3B, Fig. 3C and the Fig. 3D.

Fig. 4C is a drawing showing the outdoor terminal 3 constituted by combining the Fig. 3A and the Fig. 3C.

Next, the mobile satellite communication terminal of the present invention is described referring to drawings.

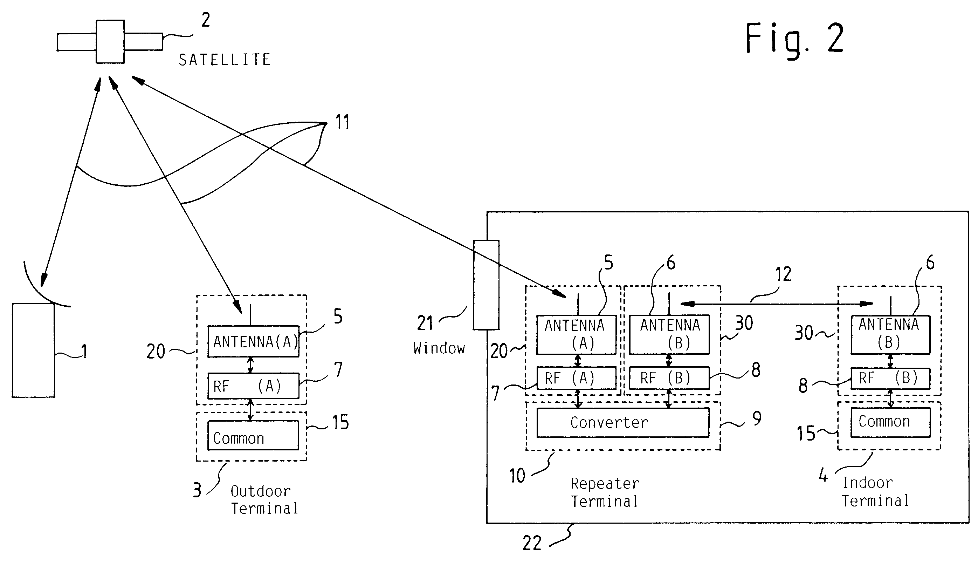

Fig. 2 shows a system diagram of the mobile satellite communication terminal of the present invention.

The mobile satellite communication terminal of the present invention in the drawings is provided mainly with mobile terminals 3 and 4 which are directly connected to subscriber terminals such as a telephone, a facsimile, low speed data and the like, and of which a signal is transmitted using a satellite channel 11 or a ground radio channel 12. Also, it is classified into two kinds of the above-mentioned terminals and the repeater terminal in which transmitting and receiving signals between the satellite channel 11 and the ground radio channel 12 are converted. Further, in the mobile terminals, the indoor unit and the outdoor unit are attachable and detachable and the other sections has the common constitution, and the mobile terminals are classified into two kinds of terminals depending on different type of the unit. That is, these are the mobile terminal 3 (hereinafter referred to as an outdoor terminal) to which the outdoor unit for satellite communication is attached and the mobile terminal 4 (hereinafter referred to as an indoor terminal) to which the indoor unit for the radio channel is attached.

Thus, the reason for classifying into the outdoor terminal 3 and the indoor terminal 4 is as follows.

Normally, a microwave band or a quasi-microwave band is used for communication with the satellite 2. Also, its modulation system, for example, is QPSK (Quadruple Phase Shift Keying) and OQPSK (Offset Quadruple Phase Shift Keying) modulation system which can efficiently utilize such a high frequency band and also can operate with a low C/N (Carrier to Noise ratio) ratio.

On the other hand, since a distance of the ground radio channel between the repeater terminal 10 and the indoor terminal 4 is very short, in order to broaden directivity as much as possible, a comparatively low frequency band such as a VHF band or less is used. Also, as a modulation system, for example, FSK modulation and FM modulation are used.

Thus, since two channels of which usage is different are used, terminals are classified into the outdoor terminal 3 and the indoor terminal 4. Then, the ground radio channel is a channel which is used for indoor communication only, in which a comparatively low frequency (e.g. VHF band) is used, and out of sight communication can be performed.

The mobile satellite communication system shown in Fig. 2 is constituted by using the above-mentioned mobile satellite communication terminal.

That is, the repeater terminal 10 is installed at a place from which the satellite can be seen, for example, an adjacent place of the window 21, in the building 22 shown in Fig. 2.

This repeater terminal 10 is constituted with the outdoor unit 20 which contains an antenna (A)5 to communicate with the satellite 2 and a radio frequency circuit RF(A)7 for the satellite channel and the indoor unit 30 which contains an antenna (B)6 and a radio frequency circuit RF(B)8 for the ground radio channel. Also its terminal is constituted with a converter section 9 which alternately converts signals of the satellite channel and the ground radio channel. Further, the indoor terminal 4 which is constituted with the indoor unit 30 and a common section 15, and can communicate with the repeater terminal 10 by the ground radio channel 12 is installed inside the building 22.

On the other hand, the outdoor terminal 3 which is constituted with the outdoor unit 20, and the common section 15, and can communicate with the satellite by the satellite channel is installed outdoors.

Hereafter, concrete operation of the mobile satellite communication terminal is described.

First, the repeater terminal 10 is described.

In the present invention, the repeater terminal 10 is installed at a position from which the satellite can be seen to utilize satellite communication indoors. This repeater terminal 10 is provided with the outdoor unit 20 for satellite communication, the indoor unit 30 for the ground radio channel, and the converter 9 for converting a signal also is provided. For example, when a signal from the satellite 2 is received, the signal of the satellite channel is directly received by the antenna (A)5 through the window 21, after the signal is converted to a signal of the ground radio channel by the converter 9, it is transmitted to the indoor terminal 4 using the ground radio channel. Consequently, even if the indoor terminal 4 is installed at a position from which the satellite 2 cannot be seen, communication can be performed through the repeater terminal 10.

Next, concrete constitution of the indoor terminal 4 is described.

The indoor terminal 4 is constituted with the indoor unit 30 for the ground radio channel 12 and the common section 15. Then the RF(B)8 has a function of transmission and reception for a radio frequency signal for the ground radio channel 12. Also, the common section 15 has a modulation/demodulation function and a function for processing a baseband and the like. Therefore, when a voice, a low-speed data signal or the like are transmitted from the indoor terminal 4 to the central earth station 1, first, a modulated signal by a modulation/demodulation system (B) for the ground radio channel is outputted by the common section 15. Next, after the modulated signal is converted to a carrier frequency (B) by the RF(B)8, transmitted to the repeater terminal 10 by the antenna (B)6. The repeater terminal 10 receives the transmitted signal having the carrier frequency (B) modulated by the above-mentioned modulation/demodulation system (B) by using the antenna (B)6. Receiving a signal from the indoor terminal 4, the conversion section 9 converts the carrier frequency (B) to a carrier frequency (A) being a carrier wave for satellite communication, and converts the modulation/demodulation system (B) to a modulation/demodulation system (A) being a modulation/demodulation system for satellite communication respectively. An output signal of the conversion section 9 is transmitted to the satellite 2 with the carrier frequency (A) and the modulation/demodulation system (A) by the antenna (A)5 being the satellite communication antenna using the satellite channel 11.

Also, when a signal is received by the indoor terminal 4, a modulated signal from the satellite 2 with the carrier frequency (A) and the modulation/demodulation system (A) the satellite 2 is received by the repeater terminal 10. The signal received by the repeater terminal 10 is converted to a signal for the ground radio channel with the carrier frequency (B) and the modulation/demodulation system (B), and transmitted to the indoor terminal 4. The indoor terminal 4 receives the signal from the repeater 10, and outputs the received signal.

Next, the case in which the mobile satellite communication terminal of the present invention is used as the outdoor terminal 3 is described.

An antenna (A)5 for satellite communication is mounted to the outdoor terminal 3 so that the satellite communication channel can be utilized. As mentioned above, the mobile terminals have the same constitution independently of the outdoor terminal or the indoor terminal except for the outdoor unit.

As mentioned above, constitution of the terminals in which the modulation/demodulation system is different depending on the system for the ground radio channel or the system for the satellite channel is described. However, in order to simplify constitution of the terminals, it is not always restricted to this constitution, but the modulation/demodulation systems used for the ground radio channel or the satellite channel may be made the same system.

Next, concrete constitution of the mobile satellite communication terminal of the present invention is described in detail.

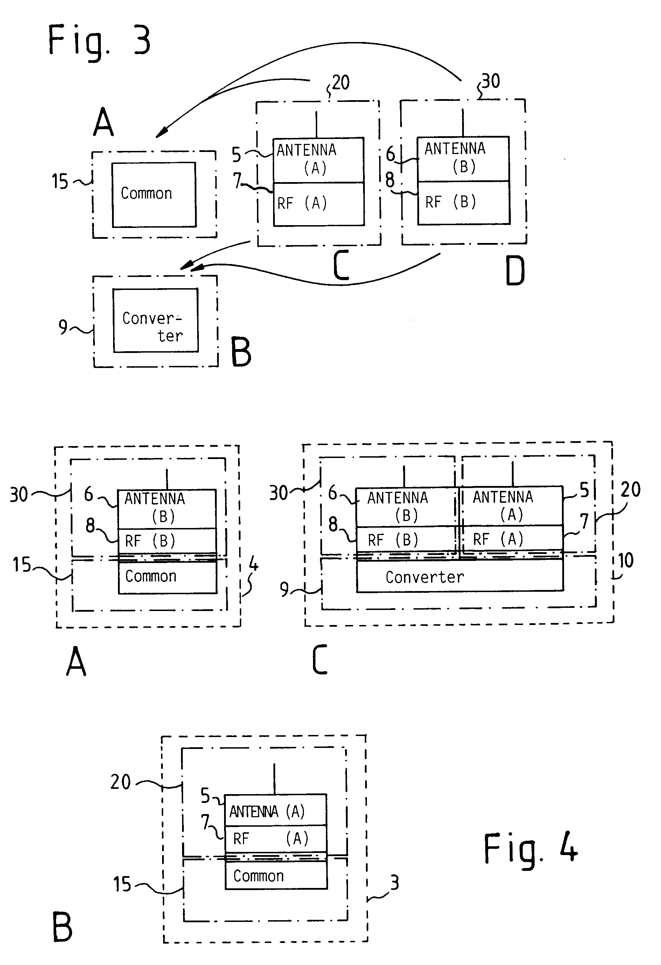

Fig. 3A- 3D are drawings showing a exchange unit being the basic constitution element of the mobile satellite communication terminal of the present invention.

That is, these drawing show exchange units required for the outdoor terminal 3 and the indoor terminal 4. Then, Fig. 3A shows the common section 15 having a function by which modulation/demodulation processing is performed with an IF band, a base band signal processing function by which outside terminals are interfaced and a signal is processed, and the like. And Fig. 3B shows the outdoor unit 20 which is integrated with the conversion section 9 having conversion functions of carrier frequencies (A), (B) and conversion functions of modulation/demodulation systems (A), (B), the antenna section 15 which communicates with a transmission/reception frequency (A), and the RF section 17. Also, Fig. 3D shows the indoor unit 30 which is provided with the antenna section (B)6 communicating with a transmission/reception frequency (B) for indoor communication, and the RF section (B)8.

The indoor unit 30 and the outdoor unit 20 are exchangable unit.

Then, the outdoor unit 20 and the indoor unit 30 are mounted to the common section 15 together, and only either of them is selectively connected to the section 15. In this case, both are connected by using a coaxial cable or a coaxial connector. Also, the outdoor unit 20 and the indoor unit 30 can be mounted to the conversion section 9 together.

Fig. 4A- 4C are drawings showing constitution of the mobile satellite communication terminal of the present invention using exchange units shown in Fig. 3A-3D.

Fig. 4A and Fig. 4B are drawings showing constitution of the indoor terminal 4 and outdoor terminal 3 in which the indoor unit 30 and the outdoor unit 20 are mounted to the common section 15 respectively.

Fig. 4C is a drawing showing constitution of the repeater terminal 10 in which both of the outdoor unit 20 and the indoor unit 30 are mounted to the conversion section 9.

Therefore, it is clear that only at least respective one outdoor unit and two indoor units are required to communicate with the satellite 2 from the indoor place. And outdoors, at least one outdoor unit may be provided.

The above-mentioned outdoor terminal 3 is described so that it is used outdoors, but it is natural that the terminal 3 can be used indoors if it is installed at a position from which the satellite can be seen, for example, a place near the window and the like. In the same way, it is natural that the indoor terminal and the repeater terminal can be used outdoors.

As mentioned above, in the mobile satellite communication terminal of the present invention, when it is used outdoors, the outdoor terminal is constituted by combining the outdoor unit and the common section, and when it is used indoors, the repeater terminal is constituted by mounting the outdoor unit and the indoor unit to the conversion section, also the indoor terminal is constituted by combining the indoor unit and the common section, and connected to the repeater terminal. Consequently, the indoor terminal has performance by which mobility as the mobile terminal can be fully displayed.

Also, since both of the repeater terminal and the indoor/outdoor terminals can be matched, a flexible terminal can be provided.

## Claims

1. A mobile satellite communication terminal which transmits and receives a signal through the satellite moving indoors and outdoors comprising;
an indoor terminal in which an attachable/detachable indoor unit constituted with a first high frequency circuit (RF) section for transmission/reception and a first antenna for transmission/reception in a ground radio channel are mounted to a common section and which transmits and receives a signal connected to the outside by using said ground radio channel,
a repeater terminal to which said indoor unit and an attachable/detachable outdoor unit constituted with a second RF section for transmission/reception in a satellite channel and a second antenna are mounted, and which converts a signal in said ground radio channel to a signal in said satellite channel, and
an outdoor terminal in which said outdoor unit is mounted to said common section and which transmits and receives a signal connected to the outside by using said satellite channel.

2. The communication terminal of claim 1, wherein said indoor and outdoor units are mechanically attachable and detachable to said common section and either of which is selectively mounted to said common section.

3. The communication terminal of claim 1 or 2, wherein said indoor unit and said outdoor unit are mounted to a conversion section together and said terminal is installed at a position from which the satellite can be seen.

4. The communication terminal of claim 1, 2 or 3, wherein said common section has a modulation/demodulation function of a transmission/reception signal of said indoor unit or said outdoor unit and a baseband processing function.

5. The communication terminal of claim 3 or 4, wherein said conversion section has a function by which a transmission/reception frequency of the ground radio channel used for said indoor unit and a transmission/reception frequency of the satellite channel used for said outdoor unit are alternately converted.

6. The communication terminal of any one of claims 1 to 5, wherein the ground radio channel uses a low frequency band such as a VHF band or less.
